# EUROPÄISCHE PATENTANMELDUNG

(11) **EP 0 857 748 A1**
(43) Veröffentlichungstag der Anmeldung: **12.08.1998**
(21) Anmeldenummer: 98101960.7
(22) Anmeldetag: 05.02.1998
(51) Int. Cl.: C08J 3/12, C08G 77/398, C08G 77/58

(54) **Metallabscheidungen auf mesoskopischen Organopolysiloxanpartikeln**

(30) Priorität: 06.02.1997 DE 19704538
(71) Anmelder: Wacker-Chemie GmbH, 81737 München (DE)
(72) Erfinder: Baumann, Frank, Dr., 84561 Mehring (DE); Deubzer, Bernward, Dr., 84489 Burghausen (DE); Schmidt, Manfred, Prof. Dr., 55294 Bodenheim (DE)
(74) Vertreter: Fritz, Helmut, Dr.

(57) **Zusammenfassung**

Die Organopolysiloxanpartikel bestehen aus einem einzigen Molekül, sind vernetzt, weisen Metallatome in der Oxidationsstufe 0 auf, welche jeweils mindestens mit einem weiteren Metallatom in der Oxidationsstufe 0 in intermetallischer Wechselwirkung stehen, besitzen einen mittleren Durchmesser von 5 bis 200 nm und sind in mindestens einem organischen Lösungsmittel, das ausgewählt wird aus Dichlormethan, Pentan, Aceton, Toluol und Ethanol zu mindestens 0.1 Gew.-% löslich, wobei mindestens 80% der Partikel einen Durchmesser besitzen, der höchstens 30 % vom mittleren Durchmesser abweicht.

## Beschreibung

Die Erfindung betrifft aus einem einzigen Molekül bestehende monodisperse, lösliche Organopolysiloxanpartikel, die Metallatome in der Oxidationsstufe 0 mit intermetallischer Wechselwirkung aufweisen, deren Herstellung und Verwendung. Die Organopolysiloxanpartikel weisen einen mittleren Durchmesser von 5 bis 200 nm auf und befinden sich deshalb im mesoskopischen Größenbereich.

Die Abscheidung von Metallen oder Metallegierungen auf Substratoberflächen, meist Kieselsäuren oder Aktivkohle ist bekannt. In W. Zou et al., Materials Letters, 24 (1995), 35-39 ist die Herstellung von Makrogelen, die eine Metallsalzeinlagerung aufweisen, in einem Sol-Gel-Prozeß, ausgehend von Metallsalzlösungen und Tetraethoxysilan beschrieben. Durch anschließendes reduktives Calzinieren der gemahlenen Gele werden platin-, palladium- oder iridiumhaltige Silicagele gewonnen. Anwendung finden die auf diesem Weg hergestellten metallbeschichteten Substrate hauptsächlich als heterogene Katalysatoren, z. B. zur Hydrierung von Kohlenstoffdoppelbindungen oder bei der Abgasentgiftung. Diese Katalysatorsysteme weisen aber alle Nachteile eines heterogenen Katalysators auf, wie geringere Aktivität aufgrund der geringen katalytisch aktiven Oberfläche und geringe Selektivität. Weiter stellt sich die für die katalytischen Prozesse wichtige Metallpartikelgröße eher zufällig ein. Auch ist die Lokalisation der Metallpartikel von der Prozeßführung bei der Gelierung abhängig und somit ist der für katalytische Reaktionen zugängliche Metallanteil schwer einstellbar.

Eine erste Verbesserung bringt hier die ebenfalls bekannte Darstellung von definierten, in Lösung stabilen Metallkolloiden durch in situ Reduktion und Stabilisierung, z. B. in Mikroemulsion oder inverser Mikroemulsion, oder die elektrochemische Reduktion von Metallsalzen in Gegenwart von stabilisierend wirkenden Tensiden. Aus Antonietti et al., Nachr. Chem. Lab. 44, 1996, 6, S.579 ist bekannt, daß die Stabilisierung dieser kolloidalen Teilchen mittels Tensid unter härteren Bedingungen, wie erhöhter Temperatur, erhöhten Salzgehalt und aggressiven Reaktionsmedien zusammenbricht. Dabei bilden sich Kolloidaggregate mit geringerer Reaktivität und Selektivität.

Eine weitere Variante, nämlich die Stabilisierung von in situ durch Reduktion erzeugten Metallkolloiden durch amphiphile Blockcopolymere, wie Polystyrolpolyacrylsäurecopolymer ist ebenfalls in Antonietti et al., Nachr. Chem. Lab. 44, 1996, 6, S.579 beschrieben. Der Vorteil dieser Systeme ist eine wesentlich geringere Empfindlichkeit gegenüber Temperaturänderungen, der chemischen Umgebung und Salzeffekten. Weiter sind die so stabilisierten Metallkolloide nach dem Eintrocknen wieder in organischen Lösungsmitteln redispergierbar. Aber auch diese Variante hat einige Nachteile. So ist die Synthese der amphiphilen Blockcopolymeren mit großem synthetischen Aufwand verbunden, weiter ist die Kolloidpartikelgröße nicht einfach steuerbar aufgrund des Einflusses von Reduktionsbedingungen, wie Temperatur, Lösungsmittel, Reduktionsmittel und Metallsalzvorstufe und schließlich sind aktive Metallzentren im inneren der Metallkolloide unzugänglich. Ein weiterer Nachteil ist, daß immer ein externes Reduktionsmittel, wie Hydrazin oder Natriumborhydrid zur Metallsalzreduktion zugesetzt werden muß. Auch beeinflußt das Reduktionsmittel über Nucleierungsprozesse erheblich die erhaltenen Metallkolloidgröße bzw. -verteilung und ist somit ein weiterer Unsicherheitsfaktor bei der gezielten Einstellung der Kolloidpartikelgröße. Auch sind diese bis jetzt beschriebenen kolloidalen Metallsysteme nur auf die organische Phase beschränkt.

Mit den oben vorgestellten Methoden ist kein gezielter Schichtaufbau von Metallnanostrukturen möglich, sondern, wenn überhaupt, können nur statistische Metallegierungen hergestellt werden.

Es bestand die Aufgabe, in organischen Lösungsmitteln lösliche Organopolysiloxanpartikel bereitzustellen, die Metallabscheidungen aufweisen und eine monodisperse Teilchengrößenverteilung innerhalb eines Größenbereichs von 5 bis 200 nm besitzen.

Die Erfindung betrifft aus einem einzigen Molekül bestehende vernetzte Organopolysiloxanpartikel, die Metallatome in der Oxidationsstufe 0 aufweisen, welche jeweils mindestens mit einem weiteren Metallatom in der Oxidationsstufe 0 in intermetallischer Wechselwirkung stehen, einen mittleren Durchmesser von 5 bis 200 nm besitzen und die in mindestens einem organischen Lösungsmittel, das ausgewählt wird aus Dichlormethan, Pentan, Aceton, Toluol und Ethanol zu mindestens 0.1 Gew.-% löslich sind, wobei mindestens 80% der Partikel einen Durchmesser besitzen, der höchstens 30 % vom mittleren Durchmesser abweicht.

Die Organopolysiloxanpartikel weisen typischerweise mittlere Molmassen von mindestens 10⁴ g/mol, insbesondere 5 x 10⁵ g/mol und vorzugsweise höchstens 10¹⁰ g/mol, insbesondere 10⁹ g/mol auf. Die mittleren Durchmesser der metallhaltigen Organopolysiloxanpartikel betragen vorzugsweise 10 und höchstens 200 nm. Vorzugsweise besitzen 80% der Partikel einen Durchmesser, der höchstens 20%, insbesondere höchstens 10% vom mittleren Durchmesser abweicht. Bei den metallhaltigen Organopolysiloxanen handelt es sich vorzugsweise um sphärische Partikel.

Die metallhaltigen Organopolysiloxanpartikel sind in Lösungsmitteln löslich und können deshalb z. B. wie homogene Katalysatoren eingesetzt werden, wobei aber das katalytisch aktive Metall, in Form von Kolloiden, Clustern oder Schichten auf der Organopolysiloxanpartikeloberfläche immobilisiert ist, und somit auch die Vorteile einer heterogenen Katalyse bietet. Vorzugsweise beträgt die Löslichkeit in einem Lösemittel mindestens 0.01 Gew.-%, insbesondere mindestens 0.1 Gew.-%. Die Lösungsmittel, in denen sich die metallhaltigen Organopolysiloxanpartikel lösen, hängen zum einen vom Aufbau der Organopolysiloxanpartikel und zum anderen von der Art und Dichte der Metallbelegung auf der Partikeloberfläche ab. Für alle metallhaltigen Organopolysiloxanpartikel gibt es mindestens ein geeignetes Lösungsmittel. Beispiele für solche Lösungsmittel sind Alkohole, wie Methanol, Ethanol, n-Propanol, iso-Propanol; Ether, wie Dioxan, Tetrahydrofuran, Diethylether, Diethylenglycoldimethylether; chlorierte Kohlenwasserstoffe, wie Dichlormethan, Trichlormethan, Tetrachlormethan, 1,2-Dichlorethan, Trichlorethylen; gesättigte Kohlenwasserstoffe, wie Pentan, n-Hexan, Oyclohexan, Hexan-Isomerengemische, Heptan, Oktan, Waschbenzin, Petrolether; alipatisch ungesättigte Kohlenwasserstoffe, nämlich Alkene, wie Penten, Hexen, Octen, Diene wie Hexadien, Cyclooctadien und Alkine, wie Butin; aromatische Kohlenwasserstoffe, wie Benzol, Toluol, Xylole; Ketone, wie Aceton, Methylethylketon, Methyl-isobutylketon, Cyclohexanon; stickstoffhaltige organische Lösemittel, wie Nitrobenzol, Nitromethan, Dimethylformamid; schwefelhaltige organische Lösemittel, wie Schwefelkohlenstoff; und oligomere und polymere Siloxane mit gegebenfalls funktionellen Gruppen, wie Vinylgruppen, z.B. α,ω-vinylterminierte Dimethylpolysiloxane, oder Gemische dieser Lösungsmittel, sowie Monomere, wie Methylmethacrylat oder Styrol und flüssige Polymere. Die metallbeschichteten Partikel sind auch in Wasser zu mindestens 0.1 Gew.-% redispergierbar.

Die atomaren Eigenschaften eines einzelnen Metallatoms in der Oxidationsstufe 0 in den Organopolysiloxanpartikeln sind aufgehoben, es liegen Metalleinheiten, aber noch kein metallischer Festkörper vor. Die Eigenschaften der Metalleinheiten liegen zwischen den Eigenschaften eines Einzelatoms und denen eines metallischen Festkörpers. Die Leitungsbänder der einzelnen Atome nähern sich an. Der Energieabstand vom Grundniveau zum Leitungsband nimmt ab. Vorzugsweise stehen mindestens 3, insbesondere mindestens 5 Metallatome der Oxidationsstufe 0 miteinander in intermetallischer Wechselwirkung.

Der relative gesamte Gehalt an Metall in der Oxidationsstufe 0 der Organopolysiloxanpartikel beträgt mindestens 10 ppm, vorzugsweise mindestens 0,1 Gew.-%, insbesondere mindestens 1 Gew.-% und vorzugsweise höchstens 50 Gew.-%, insbesondere höchstens 10 Gew.-%, besser höchstens 5 Gew.-%. Die Bestimmung des relativen Metallgehaltes kann mit Elementaranalyse erfolgen.

Die Organopolysiloxanpartikel können beliebige Metallatome in der Oxidationsstufe 0 aufweisen.

Beliebige Metalle können sich auf den Organopolysiloxanpartikeln befinden. Vorzugsweise werden Metalle ausgewählt, die aus ihren Verbindungen durch Reduktionsmittel, wie Alkohle, Aldehyde, wie Hydrazin, Natriumborhydrid oder Hydrogensilane oder -siloxane, oder durch UV-Bestrahlung reduzierbar sind, d. h. ihr Redoxpotential ist in der jeweils gegebenen chemischen Umgebung größer als das des jeweiligen Reduktionsmittels. Für das Beispiel der Siliciumhydridbindung sind somit alle Metalle ausgehend von ihren Metallsalzen abscheidbar, deren Redoxpotenial in der jeweiligen chemischen Umgebung relativ zum Hydrid-Wasserstoffübergang größer der definitionsgemäßen Null ist. Dies trifft z. B. für alle Edelmetalle, wie Platin, Palladium, Rhodium , Rhenium, Gold, Silber, Iridium etc. zu, aber auch für z. B. Kupfer, Bismut und Kobalt.

In den vernetzten Organopolysiloxanpartikeln, können sich die Metallatome in der Oxidationsstufe 0 an verschiedenartigen Stellen in unterschiedlicher Häufung befinden. Es kann ein Metall, es können auch verschiedene Metallen in einem Organopolysiloxanpartikel vorhanden sein, wobei an verschiedenen Stellen im Organopolysiloxanpartikel auch verschiedene Metalle vorhanden sein können.

Beispielsweise befinden sich die Metallatome auf der Organopolysiloxanpartikeloberfläche, wobei sie dann in Abhängigkeit von der Belegungsdichte, in Form von Clustern bei Metallabscheidungen bis 1 nm Durchmesser; Kolloiden mit klar als Einzelpartikel auf dem Organopolysiloxan erkennbaren Strukturen von mehr als 1 nm Durchmesser; oder in einer kompletten Metallschicht vorliegen. Bei diesen Strukturen sind trotz hoher Metallbelegung keine Metallstrukturen im Teilchenelektronenmikroskop erkennbar. Die Plasmonenresonanz ist mit UV meßbar.

Beispielsweise ist auch ein Schichtaufbau möglich, der z.B. wie folgt strukturiert sein kann:
1.) Organopolysiloxan-Kern
2.) erste Metallabscheidung
3.) Organopolysiloxanschicht
4.) zweite Metallabscheidung
Diese Schichtstruktur ist auch optional ohne eine Siloxanzwischenschicht möglich, wobei auf der 2. Schicht eine weitere Metallschicht vorhanden sein kann. Es können auch weitere Schichten auf diese Art aufgebaut werden. Die Metallabscheidungen, wie 2. und 4. können als komplette Metallschicht, Metallcluster oder Metallkolloide vorliegen.

Eine weitere Variante des Schichtaufbaues ist, daß auf einen Organopolysiloxankern eine Metallschicht aufgebracht wird und um diese Metallschicht dann ein Organopolysiloxannetzwerk mit definierter Netzwerkmaschengröße und definierter chemischer Umgebung aufgebaut wird. Derartige Organopolysiloxanpartikel können sowohl als größenselektiver als auch chemisch spezifischer Katalysator eingesetzt werden.

Weiter können die vorstehend beschriebenen auf der Organopolysiloxanpartikeloberfläche befindlichen Metallabscheidungen an der Metalloberfläche Komplexliganden tragen, wie Moleküle der vorstehenden Lösungsmittel oder durch den Herstellungsprozeß bedingte Anionen oder Neutralliganden, wie Chlorid, Nitrat und Cyclooctadien.

Der Organopolysiloxananteil der Organopolysiloxanpartikel besteht bevorzugt im wesentlichen aus
0,5 bis 80 Gew.-% Einheiten der allgemeinen Formel 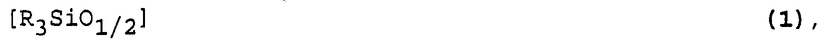
0 bis 99.0 Gew.-% Einheiten der allgemeinen Formel 0 bis 99,5 Gew.-% Einheiten 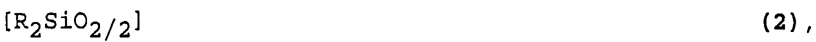 der allgemeinen Formel 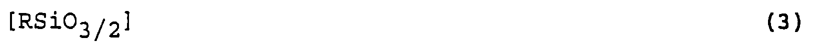 und
0 bis 99,5 Gew.-% Einheiten der allgemeinen Formel 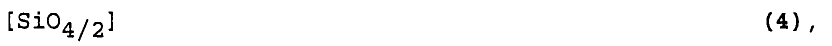 wobei
   - **R**: ein Wasserstoffatom oder gleiche oder verschiedene einwertige SiC-gebundene, gegebenenfalls funktionelle Gruppen tragenden C₁- bis C₁₈-Kohlenwasserstoffreste bedeutet.

Beispiele für unsubstituierte Reste **R** sind Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest, Octadecylreste, wie der n-Octadecylrest; Cycloalkylreste, wie Cyclopentyl-, Cyclohexyl-, 4-Ethylcyclohexyl-, Cycloheptylreste, Norbornylreste und Methylcyclohexylreste; Arylreste, wie der Phenyl-, Naphthyl- und Anthryl- und Phenanthrylrest; Alkarylreste, wie o-, m-, p-Tolylreste, Xylylreste und Ethylphenylreste; Aralkylreste, wie der Benzylrest, der alpha- und der β-Phenylethylrest.

Beispiele für funktionelle Gruppen tragende Kohlenwasserstoffreste **R** sind halogenierte Kohlenwasserstoffreste, nämlich Halogenalkylreste, wie der Chlormethyl-, 3-Chlorpropyl-, 3-Brompropyl-, 3,3,3-Trifluorpropyl- und 5,5,5,4,4,3,3-Heptafluorpentylrest und Halogenarylreste, wie der o-, m-, und p-Chlorphenylrest; primäre, sekundäre und tertiäre Amine tragende Kohlenwasserstoffreste, z.B Aminoalkylreste, wie der 2-Aminoethyl-, 3-Aminopropyl-, N-(2-Aminoethyl)-3-aminopropyl-, N-(2-Aminoethyl)-3-amino-(2-methyl)propyl- und Pyrimidinylrest, Aminoarylreste, wie der Aminophenylrest; quarternäre Ammoniumreste; Mercaptogruppen tragende Kohlenwasserstoffreste, wie der 2-Mercaptoethyl- und 3-Mercaptopropylrest; Cyanoalkylreste, wie der 2-Cyanoethyl- und 3-Cyanopropylrest; Acrylgruppen tragende Kohlenwasserstoffreste, z.B Acryloxyalkylreste, wie der 3-Acryloxypropyl- und 3-Methacryloxypropylrest; Hydroxylgruppen tragende Kohlenwasserstoffreste, z.B Hydroxyalkylreste, wie der Hydroxypropylrest; Phosphonsäure-, Phosphonato- und Sulfonatogruppen tragende Kohlenwasserstoffreste; ungesättigte, durch die Heteroatome O, N oder S unterbrochene Kohlenwasserstoffreste, wie der Furanyl-, Pyridyl- oder Thiophenylreste.

Bei dem Rest **R** handelt es sich bevorzugt um unsubstituierte C₁- bis C₆-Alkylreste, Phenylreste und Wasserstoff, insbesondere um den Methylrest.

Der Organopolysiloxananteil der Organopolysiloxanpartikel in den umhüllenden Siloxanschichten kann die gleiche oder eine andere Zusammensetzung als im Zugrundeliegenden Siloxankern haben. Die Siloxanhülle besitzt vorzugsweise eine Dicke von 1 bis 10 nm, insbesondere höchstens 5 nm und besonders bevorzugt höchstens 2 nm.

Insbesondere enthalten die Organopolysiloxanpartikel mindestens 0.1 Gew.-% an Metall und der Organopolysiloxananteil der Organopolysiloxanpartikel besteht aus
1 bis 80 Gew.-% Einheiten der allgemeinen Formel (1),
0 bis 98 Gew.-% Einheiten der allgemeinen Formel (2),
0 bis 99 Gew.-% Einheiten der allgemeinen Formel (3) und
0 bis 99 Gew.-% Einheiten der allgemeinen Formel (4) mit der Maßgabe, daß die Summe der Einheiten der allgemeinen Formeln (3) und (4) mindestens 1 Gew.-% beträgt.

Metallhaltige Organopolysiloxanpartikel und Organopolysiloxanhüllen, die mindestens zu 80 Mol-% aus Einheiten der allgemeinen Formel (2) aufgebaut sind, haben elastomere Eigenschaften. Diese Partikel oder derartig aufgebaute Siloxanumhüllungen sind in den vorstehenden organischen Lösungsmitteln, insbesondere in Toluol, Tetrahydrofuran, Dioxan, Petrolether, chlorierten Kohlenwasserstoffen und Alkenen quellbar. Somit sind in diesen gequollenen Partikeln im Inneren liegende Metallcluster, -kolloide oder -schichten für z. B. katalytische Reaktionen zugänglich. Zugleich ist über die Einstellung der Maschenweite bei einer umhüllenden quellbaren Siloxanschicht eine Größenselektivität für die katalysierte Reaktion einstellbar.

Weiterer Gegenstand der Erfindung ist ein Verfahren zur Herstellung der aus einem einzigen Molekül bestehenden metallhaltigen vernetzten Organopolysiloxanpartikel, bei dem
A) der Organopolysiloxananteil der Organopolysiloxanpartikel in einem ersten Schritt durch Zudosieren von Silanen der allgemeinen Formel (5) 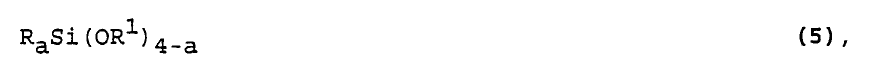 und gegebenenfalls siliciumorganischen Verbindungen der allgemeinen Formel (6) 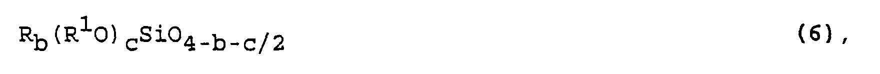 wobei
   - **R**^{**1**}: die Bedeutungen von **R**,
   - **a**: die Werte 0, 1, 2 oder 3,
   - **b** und **c**: jeweils unabhängig voneinander die Werte 0, 1, 2, 3 oder 4 und
   - **R**: die vorstehenden Bedeutungen aufweist, zu einer bewegten Mischung aus Emulgator und Wasser als eine kolloidale Suspension von Organopolysiloxanpartikeln hergestellt wird und
   in einem zweiten Schritt die kolloidale Suspension mit siliciumorganischer Verbindung der allgemeinen Formel (7) 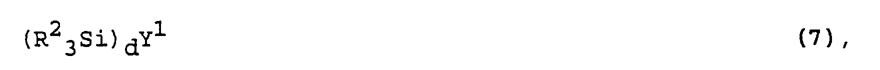 versetzt wird, wobei
   - **Y**^{**1**}: für die Bedeutungen **d** = 1 ein Wasserstoffatom, -OR³, -ONR³₂ oder -OOCR³ und
   für die Bedeutungen **d** = 2 -O- oder -S- bedeutet,
   - **R**^{**2**}und **R**^{**3**}: die Bedeutungen von **R** und
   - **d**: die Werte 1 oder 2 aufweisen,
   mit der Maßgabe, daß die siliciumorganischen Verbindungen der allgemeinen Formel (7) wasserlöslich sind oder in Wasser zu einer wasserlöslichen Verbindung hydrolysieren.

Die interpartikuläre Kondensation der Organopolysiloxanpartikel wird verhindert, indem die nach dem ersten Schritt verbliebenen, kondensationsfähigen Gruppen mit ausschließlich monofunktionelle Triorganosilylgruppen enthaltenden siliciumorganischen Verbindungen abgesättigt werden.

Vorzugsweise werden bei der Hydrolyse- oder Kondensationsreaktion der siliciumorganischen Verbindungen der allgemeinen Formel (7) keine Nebenprodukte, wie Salzsäure oder Ammoniak gebildet, die die Ionenstärke des wäßrigen kolloidalen Systems wesentlich vergrößern. Besonders bevorzugt werden als siliciumorganische Verbindungen der allgemeinen Formel (7) Trimethylmethoxysilan, Trimethylethoxysilan, Hexamethyldisiloxan, Vinyldimethylmethoxysilan, Vinyldimethylethoxysilan, 1,1,3,3-Tetramethyldisiloxan und Mischungen davon eingesetzt.

Die Isolierung der Organopolysiloxanpartikel aus den kolloidalen Suspensionen nach Beendigung des zweiten Reaktionsschrittes kann nach bekannten Verfahren erfolgen, beispielsweise durch Koagulation der Latices mittels Salzzugabe oder durch Zugabe von polaren Lösungsmitteln.

Organopolysiloxanpartikel, die in der Summe mehr als 15 Gew.-% an Einheiten der allgemeinen Formeln (3) und (4) enthalten, werden vorzugsweise nach Isolierung im Anschluß an den zweiten Schritt in einem dritten Reaktionsschritt in einem aprotischen Lösungsmittel mit siliciumorganischer Verbindung der allgemeinen Formeln (8) und/oder (9) 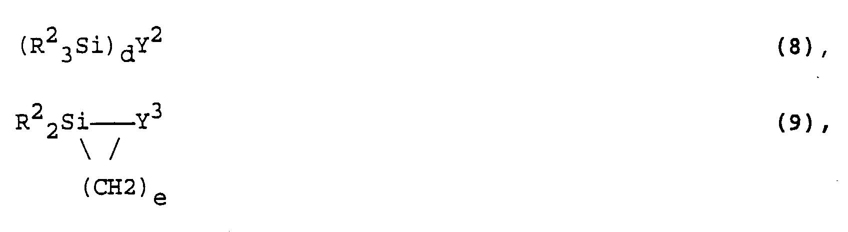 versetzt, wobei
- **Y**^{**2**}: für die Bedeutungen **d** = 1 Wasserstoff-, Halogenatome, -OR³, -NR³₂, -ONR³₂ oder -OOCR³ und
für die Bedeutungen **d** = 2 -O-, -N(R³)- oder -S-,
- **Y**^{**3**}: die Reste -O-, -N(R³)- oder -S-,
- **e**: Werte von 1 bis 30, insbesondere 2, 3 oder 4, bedeuten und
- **d, R**^{**2**} und **R**^{**3**}: die vorstehenden Bedeutungen aufweisen.

Im dritten Schritt werden vorzugsweise siliciumorganische Verbindungen der allgemeinen Formel (8) eingesetzt.

Besonders bevorzugt werden als siliciumorganische Verbindungen der allgemeinen Formel (8) in diesem dritten Reaktionsschritt Trimethylchlorsilan, Dimethylchlorsilan, Vinyldimethylchlorsilan, Hexamethyldisilazan, 1,3-Divinyl-1,1,3,3-tetramethyldisilazan, oder Gemische aus Disilazanen bzw. Chlorsilanen eingesetzt.

Die eingesetzten Mengen an Verbindungen der allgemeinen Formeln (5) bis (9) werden so gewählt, daß die gewünschten Organopolysiloxanpartikel erhalten werden. Die eingesetzten Mengen an Verbindungen der allgemeinen Formeln (5) und (6) werden im ersten Reaktionsschritt nahezu quantitativ eingebaut und steuern den Vernetzungsgrad der Organopolysiloxanpartikel in wäßriger Suspension. Die im zweiten und gegebenenfalls im dritten Reaktionsschritt eingesetzten Verbindungen der allgemeinen Formeln (7) bzw. (8) und (9) werden jeweils im Überschuß eingesetzt und somit nicht vollständig in die Organopolysiloxanpartikel eingebaut. Vorzugsweise werden 0,2 bis 10, insbesondere 0,5 bis 3 Gewichtsteile Verbindungen der allgemeinen Formel (7) im zweiten Reaktionsschritt bzw. der Summe der Verbindungen der allgemeinen Formeln (7), (8) und (9) im zweiten und dritten Reaktionsschritt, pro Gewichtsteil an Verbindungen der allgemeinen Formeln (5) und (6) eingesetzt.

Wenn ein dritter Reaktionsschritt durchgeführt wird, beträgt das Verhältnis der im zweiten Reaktionsschritt eingesetzten Menge der Verbindungen der allgemeinen Formel (7) zu der im dritten Reaktionsschritt eingesetzten Menge der Verbindungen der allgemeinen Formeln (8) und (9) vorzugsweise 1 : 10 bis 2 : 1, insbesondere 1 : 5 bis 1 : 1.

Bei dem Rest **R**^{**3**} handelt es sich bevorzugt um unsubstituierte C₁- bis C₆-Alkylreste und den Phenylrest, wobei Methyl-, Ethyl- und Propylreste besonders bevorzugt sind.

Besonders geeignete Emulgatoren sind Alkylsulfate, z.B. mit einer Kettenlänge von 8-18 C-Atomen, Aryl- und Alkylethersulfate mit 8-18 C-Atomen im hydrophoben Rest und 1-40 Ethylenoxid(EO)- bzw. Propylenoxid(PO)-Einheiten;
Sulfonate, z.B. Alkylsulfonate mit 8-18 C-Atomen,Alkylarylsulfonate mit 8-18 C-Atomen, Ester und Halbester der Sulfobernsteinsäure mit einwertigen Alkoholen oder Alkylphenolen mit 4-15 C-Atomen; ggf. können diese Alkohole oder Alkylphenole auch mit 1-40 EO-Einheiten ethoxyliert sein;
Alkali- und Ammoniumsalze von Carbonsäuren mit 8-20 C-Atomen im Alkyl-, Aryl-, Alkaryl- oder Aralkylrest;
Phosphorsäureteilester und deren Alkali- und Ammoniumsalze, z. B. Alkyl- und Alkarylphosphate mit 8-20 C-Atomen im organischen Rest, Alkylether- bzw. Alkaryletherphosphate mit 8-20 C-Atomen im Alkyl- bzw. Alkarylrest und 1-40 EO-Einheiten;
Alkylpolyglykolether mit 2-40 EO-Einheiten und Alkylresten von 4-20 C-Atomen;
Alkylarylpolyglykolether mit 2-40 EO-Einheiten und 8-20 C-Atomen in den Alkyl- und Arylresten;
Ethylenoxid/Propylenoxld(EO/PO)-Blockcopolymere mit 8-40 EO- bzw. PO-Einheiten;
Fettsäurepolyglykolester mit 6-24 C-Atomen und 2-40 EO-Einheiten;
Alkylpolyglykoside, Naturstoffe und deren Derivate, wie Lecithin, Lanolin, Saponine, Cellulose; Cellulosealkylether und Carboxyalkylcellulosen, deren Alkylgruppen jeweils bis zu 4 Kohlenstoffatome besitzen;
polare Gruppen enthaltende lineare Organo(poly)siloxane mit Alkoxygruppen mit bis zu 24 C-Atomen und/oder bis zu 40 EO- und/oder PO-Gruppen;
Salze von primären, sekundären und tertiären Fettaminen mit 8-24 C-Atomen mit Essigsäure, Schwefelsäure, Salzsäure und Phosphorsäuren;
Quarternäre Ammoniumsalze wie Halogenide, Sulfate, Phosphate, Acetate oder Hydroxide, deren Alkylgruppen unabhängig voneinander 1-24 C-Atome besitzen; gegebenenfalls können die Alkyl- oder Alkaryl- oder Aralkylgruppen der quarternären Ammoniumverbindungen auch teilweise ethoxyliert sein (1-40 EO-Einheiten);
Alkylpyridinium-, Alkylimidazolinium- und Alkyloxazoliniumsalze, deren Alkylkette bis zu 18 C-Atome besitzt, in Form ihrer Halogenide, Sulfate, Phosphate oder Acetate.

Bevorzugt sind aliphatisch substituierte Benzolsulfonsäuren und deren Salze sowie gegebenenfalls teilethoxylierte quarternäre Ammoniumhalogenide und -hydroxide. Besonders bevorzugt sind Dodecylbenzolsulfonsäure und Benzyldimethyl-{2-[2-(p-1,1,3,3-tetramethylbutyl-phenoxy)-ethoxy]-ethyl}-ammoniumchlorid (Benzethoniumchlorid).

Die einzusetzende Menge an Emulgator beträgt von 0,5 - 50 Gew.-%, vorzugsweise von 1,0 - 30 Gew.-%, jeweils bezogen auf die insgesamt eingesetzte Menge an siliziumorganischen Ausgangsverbindungen des ersten und zweiten Reaktionsschrittes. Die siliziumorganischen Ausgangsverbindungen der allgemeinen Formeln (9) bis (11) werden während des ersten Reaktionsschrittes bevorzugt dosiert zugegeben. Vorzugsweise werden alle Ausgangskomponenten der allgemeinen Formeln (9) bis (11) vor der Dosierung während des ersten Reaktionsschritts im gewünschten Verhältnis gemischt; um eine homogene Mischung zu erhalten, werden gegebenenfalls zusätzlich 0,1 - 30 Gew.-% bezogen auf die Summe der Ausgangskomponenten der allgemeinen Formeln (9) bis (11), Alkanol der Formel R⁷OH, bei dem R⁷ ein Alkylrest mit 1 bis 5 Kohlenstoffatomen ist, als Löslichkeitsvermittler zugesetzt, wobei die Alkanole Methanol und Ethanol besonders bevorzugt sind.

Als aprotisches organisches Lösungsmittel werden im dritten Schritt vorzugsweise die vorstehend beschriebenen Ether, Kohlenwasserstoffe, Ketone und Organopolysiloxane, insbesondere Tetrahydrofuran, Cyclohexan, Methylcyclohexan oder Toluol verwendet. Die Umsetzung sowohl im ersten (Emulsionspolykondensation/-polymerisation) als auch im zweiten Reaktionsschritt wird vorzugsweise bei 5 - 95 °C, insbesondere bei 10 - 85 °C und besonders bevorzugt bei 10 - 40 °C durchgeführt. Der pH-Wert beträgt jeweils von 1 - 12, vorzugsweise von 1 - 4 oder von 7 - 11, in Abhängigkeit von der Säure-/Basestabilität der Reste **R**, **R**^{**1**}, **R**^{**2**} und **R**^{**3**} der Ausgangsverbindungen (5) bis (9).

Bei der Herstellung der kolloidalen Suspensionen während des ersten Reaktionsschrittes ist es für die Stabilität der Emulsion vorteilhaft, nach Ende der Dosierung der siliziumorganischen Ausgangsverbindungen der allgemeinen Formeln (5) und (6) noch 1 bis 24 Stunden nachzurühren. Das bei der Hydrolyse freigesetzte Alkanol kann durch Destillation, ggf. unter reduziertem Druck, entfernt werden, was aber nicht bevorzugt ist. Der Festgehalt der nach dem ersten Schritt hergestellten kolloidalen Suspension sollte vorzugsweise maximal 25 Gew.-% betragen, da sonst ein hoher Anstieg der Viskosität die weitere Umsetzung erschwert. Bei der Umsetzung der kolloidalen Suspension mit siliziumorganischer Verbindung der allgemeinen Formel (7) im zweiten Reaktionsschritt ist es zur Erzielung einer möglichst vollständigen Reaktion ebenfalls vorteilhaft, nach Ende der Zugabe von Verbindungen der allgemeinen Formel (7) noch 1 - 48 Stunden nachzurühren.

Die Umsetzung mit siliziumorganischer Verbindung der allgemeinen Formel (8) und (9) im dritten Reaktionsschritt wird vorzugsweise bei 5 - 95 °C, insbesondere bei 10 - 85 °C und besonders bevorzugt bei 10 - 40 °C durchgeführt. Zur Erzielung einer möglichst vollständigen Reaktion ist es wiederum vorteilhaft, nach Ende der Zugabe der Verbindung der allgemeinen Formel (8) und (9) noch 1 - 24 Stunden nachzurühren. Für die Aufarbeitung und Isolierung der metallfreien Organopo

lysiloxanpartikel können alle gängigen aus der Polymersynthese bekannten Aufarbeitungsverfahren angewandt werden, wie das Ausfällen und anschließende Abtrennen des Polymeren, oder das Abdampfen von Lösemitteln und nicht umgesetzten Edukten. Bevorzugt ist hierbei die Ausfällung der Organopolysiloxanpartikel mit kurzkettigen Alkoholen, besonders bevorzugt als Fällungsmittel ist hierbei der Methanol und das anschließende Abfiltrieren bei Raumtemperatur.
Die in Form eines Pulvers erhaltenen Organopolysiloxanpartikel werden getrocknet, bevorzugt im Hochvakuum bei einem Druck <0,0001 MPa bei 20°C bis 100°C, besonders bevorzugt im Hochvakuum bei 20°C bis 50°C.

Die in Verfahrensstufe A) hergestellten und isolierten metallfreien Organopolysiloxanpartikel können auch redispergiert werden.

Im Verfahren zur Herstellung der aus einem einzigen Molekül bestehenden metallhaltigen vernetzten Organopolysiloxanpartikel kann in Verfahrensstufe B) der Metallanteil der Organopolysiloxanpartikel durch Reduktion einer Metallverbindung mit einem Reduktionsmittel nach beispielsweise nachstehenden Verfahren auf die beispielsweise nach Verfahrensstufe A hergestellten metallfreien Organopolysiloxanpartikel abgeschieden werden:
B1) Die Abscheidung des Metallanteils kann in organischen Lösungsmitteln erfolgen. Dazu werden die metallfreien Organopolysiloxanpartikel in einen geeigneten Lösemittel gelöst. Beispiele für geeignete Lösemittel sind die für die metallhaltigen Organopolysiloxanpartikel geeigneten Lösungsmittel.
B1a) Die Abscheidung des Metallanteils erfolgt an metallfreien Organopolysiloxanpartikeln, welche Hydridofunktionen (SiH-Gruppen) tragen. Die bevorzugten Konzentrationen an hydridofunktionellen Organopolysiloxanen sind mindestens 1 Gew.-%, höchstens 50 Gew.-%, insbesondere höchstens 30 Gew.-% und besonders bevorzugt höchstens 20 Gew.-% bezogen auf das Gesamtgewicht der Lösung.

Verwendbare Metallverbindungen oder geeignete Mischungen von Metallverbindungen verschiedener Metalle sind alle diejenigen, welche durch eine Siliciumhydridbindung in der entsprechenden chemischen Umgebung zum Metall reduzierbar sind, d. h. ein gegenüber dem Hydrid-Wasserstoffübergang positives Redoxpotential aufweisen, wie Edelmetallverbindungen oder Mischungen derer, z. B. Platinverbindungen wie Hexachloroplatinsäure, Palladiumverbindungen wie Palladiumdichlorid, Rutheniumverbindungen, wie Rutheniumtrichlorid, Iridiumverbindungen, Rheniumverbindungen z. B. in Form ihrer Trichloride, Goldverbindungen, wie Tetrachlorogoldsäure, Silberverbindungen, wie Silberperchlorat, Kupferverbindungen wie Kupfersulfat, -chlorid und -nitrat, Cobaltverbindungen wie Cobaltnitrat und Cobaltchlorid.

Metallfreie Organopolysiloxanpartikel, welche Hydridofunktionen (SiH-Gruppen) tragen, werden in einen geeigneten Lösemittel gelöst. Beispiele für geeignete Lösungsmittel sind die für die metallhaltigen Organopolysiloxanpartikel geeigneten Lösungsmittel.

Die Metallverbindungen sollten in einem mit dem für die hydridofunktionalisierten Organopolysiloxane verwendeten Lösungsmittel mischbaren Lösungsmittel löslich sein. Geeignete Lösungsmittelklassen für die Metallverbindungen und geeignete Beispiele hierfür sind die vorstehend für die metallhaltigen Organopolysiloxanpartikel genannten Lösungsmittel.

Die gelösten Reaktionspartner werden anschließend gemischt. Optional können auch Mischungen aus Metallverbindungen von verschiedenen Metallen zugleich oder sukzessive, für beispielsweise die Herstellung separater verschiedener Metallkolloide auf dem gleichen metallfreien Organopolysiloxanpartikel zugegeben werden, wobei nur beachtet werden muß, daß die gesamte zugegebene molare Menge an den Metallverbindungen nicht die vorhandene molare Menge an reduzierend wirkenden Siliciumhydridgruppen übersteigt. Geeignete Molverhältnisse von reduzierenden Siliciumhydridgruppen zur Metallverbindung oder Metallverbindungsmischung oder zu den insgesamt eingesetzten Metallverbindungen sind in dem Bereich der molaren Verhältnisse von 1 : 1 bis 100000 :1, besonders von 10 : 1 bis 1000 : 1 und besonders bevorzugt von 10 :1 bis 100 :1.

Während der Reaktion kann Durchmischung erfolgen, man kann aber auch ohne Durchmischung abreagieren lassen. Die Reaktionen werden vorzugsweise in einem Temperaturbereich von -80°C bis 150°C, insbesondere in einem Temperaturbereich von 0°C bis 100°C und besonders bevorzugt in einem Temperaturbereich von 25°C bis 80°C durchgeführt.

Die Reaktionszeiten betragen 1 Sekunde bis 10 Tage, bevorzugt 1 Minute bis zwei Stunden, und besonders bevorzugt 30 Minuten bis eine Stunde.

Optional kann nach der Reduktion des Metalls, die beispielsweise am Farbumschlag der Lösungen erkennbar sein kann, zur Absättigung von verbliebenen Siliciumhydridofunktionen auf dem Organopolysiloxanpartikel mit einer geeigneten Umsetzung, wie Hydrosilylierung oder Alkoholyse die verbliebenen Resthydridogruppen am Silizium abgesättigt werden. Die eingesetzten Mengen an Reaktanten für die Nachreaktion richten sich dabei allgemein nach dem rechnerischen molaren Überschuß an Siliziumhydridbindungen die auf dem Organopolysiloxanpartikel nach der kompletten Redoxreaktion verbleiben sollten. Bevorzugt ist dabei der 1,5- bis 2-fache molare Überschuß, besonders bevorzugt ist der 2- bis 5-fache molare Überschuß.

Geeignete Substanzen sind alle Verbindungen oder Mischungen von Verbindungen, die mit dem Wasserstoff der Siliciumhydridbindung, gegebenenfalls unter Metallkatalyse abreagieren können und die Lagerstabilität gegenüber interpartikulärer Kondensation der Teilchen erhöhen. Beispiele für solche Substanzen sind endständige C=C-Doppelbindungen tragende Moleküle wie Alkene, z. B. 1- Octen. Diese bilden über Hydrosilylierungen stabile Si-C-Verknüpfungen, ebenso wie die Alkine, wie Butin. Weiter sind hier auch zu nennen ein- und beidseitig vinylterminierte Makromonomere, wie α,ω-vinylterminierte Polyalkylsiloxane, allylterminierte Polystyrole und allylterminierte Polyether; längerkettige, zyklische oder aromatische Alkohole wie Pentanol, Hexanol, Cyclohexanol und Benzylalkohol. Diese reagieren zu Si-O-C Verbindungen, die aufgrund des sterisch anspruchsvollen Restes der Alkohole gegenüber Hydrolyse relativ unempfindlich sind und somit die Lagerstabilität wesentlich erhöhen.

Bevorzugt sind hierbei die Alkene und dabei besonders bevorzugt ist das 1-Octen. Die Nachreaktion finden bevorzugt bei der gleichen Reaktionstemperatur wie die Metallreduktion statt. Besonders bevorzugt wird die Nachreaktion bei 50°C bis 100°C durchgeführt. Die Reaktionszeiten betragen vorzugsweise 30 Minuten bis 2 Stunden, bevorzugt eine Stunde bis 90 Minuten. B1b) Die Abscheidung des Metallanteils an metallfreien Organopolysiloxanpartikeln erfolgt mit zugesetztem Reduktionsmittel. Im Unterschied zu Stufe B1a) wird bei diesem Verfahren ein nicht an Organopolysiloxanpartikel gebundenes, niedermolekulares Reduktionsmittel eingesetzt. Der Vorteil zu Stufe B1a) ist, daß ein größerer Redoxbereich zugänglich wird, und somit auch noch Metallverbindungen reduzierbar sind, die gegenüber der Siliciumhydridbindung redoxstabil sind. Weiter ist man bei dieser Stufe nicht auf die hydridofunktionalisierten metallfreien Organopolysiloxanpartikel als Träger beschränkt und schließlich ist durch dieses Verfahren auch der Aufbau von Metallschichtstrukturen auf einen Trägerpartikel möglich, da die Menge an verfügbarem Reduktionsmittel nicht mit der Menge an hydridofunktionalisierten metallfreien Organopolysiloxanpartikeln korreliert ist.

Als Reduktionsmittel sind alle reduzierend wirkenden Substanzen geeignet, die sich in den für die Organopolysiloxanen geeigneten Lösungsmitteln in ausreichenden Mengen von vorzugsweise mindestens 1 Gew.-% lösen. Beispiele für geeignete Reduktionsmittel sind Hydrazine wie Hydrazin, Hydroxylhydrazin; Metallborhydrid wie Natrium- oder Kaliumborhydrid; Aldehyde, wie Acetaldehyd; reduzierende Zucker, wie Fructose und Glucose; Alkohole wie Ethanol; Polyglykole; Dihydroxybenzole wie Resorcin, Hydrochinon; Alkali- und Erdalkimetallhydride, wie Natriumhydrid; Aluminumhydride wie Lithiumaluminumhydrid; reduzierend wirkende organische Säuren oder deren Salze wie Zitronensäure und Natriumcitrat.

Verwendbare Metallverbindungen oder geeignete Mischungen von Metallverbindungen verschiedener Metalle sind alle diejenigen, welche durch das Reduktionsmittel in der entsprechenden chemischen Umgebung zum Metall reduziert werden, d. h. ein gegenüber dem Reduktionsmittel positives Redoxpotential aufweisen. Geeignet sind beispielsweise die bei Stufe 1a) aufgeführten Metallverbindungen oder deren Mischungen, und weitere Metallverbindungen mit noch positiverem Redoxpotential.

Die Metallverbindungen sollten in einem mit dem für die Organopolysiloxanpartikel und das Reduktionsmittel verwendeten Lösungsmittel mischbaren Lösungsmittel gelöst sein. Gegebenenfalls kann das Lösungsmittel auch gleichzeitig Reduktionsmittel sein, wie Alkohole oder Aldehyde. Geeignete Lösungsmittel für die Metallverbindungen sind vorstehend für die Organopolysiloxanpartikel beschrieben.

Die gelösten Reaktionspartner werden anschließend gemischt. Optional können auch Mischungen aus Metallverbindungen von verschiedenen Metallen zugleich oder sukzessive, für beispielsweise die Herstellung separater verschiedener Metallkolloide auf dem gleichen metallfreien Organopolysiloxanpartikel zugegeben werden, wobei nur beachtet werden muß, daß die gesamte zugegebene Menge an den Metallverbindungen nicht die vorhandene Menge an Reduktionsmittel übersteigt. Geeignete Molverhältnisse von Reduktionsmittel zur Metallverbindung oder Metallverbindungsmischung oder zu den insgesamt eingesetzten Metallverbindungen sind in dem Bereich der molaren Verhältnisse von 1 : 1 bis 100 :1, besonders von 2 : 1 bis 10 : 1 und besonders bevorzugt von 1.5 :1 bis 2 :1.

Während der Reaktion kann Durchmischung erfolgen, man kann aber auch ohne Durchmischung abreagieren lassen.

Die Reaktionen werden vorzugsweise in einem Temperaturbereich von -80°C bis 150°C durchgeführt, bevorzugt in einem Temperaturbereich von 0°C bis 100°C und besonders bevorzugt in einem Temperaturbereich von 25°C bis 80°C.

Weiter kann eine Redoxreaktion durch Bestrahlung, z. B. durch UV-Licht angeregt werden. z. B. können auf diese Weise Gold- und Silberkolloide abgeschieden werden.

Die Reaktionszeiten betragen vorzugsweise 1 Sekunde bis 10 Tage, insbesondere 1 Minute bis zwei Stunden, und besonders bevorzugt 30 Minuten bis eine Stunde.
B2.) Die Abscheidung des Metallanteils kann in wässriger Dispersion erfolgen. Die in Verfahrenstufe A) hergestellten dispergierten metallfreien Organopolysiloxanpartikel werden mit geeigneten Metallverbindungen und gegebenenfalls mit zusätzlichem Reduktionsmittel umgesetzt. Durch unterschiedliche Verfahrensschritte können unterschiedlich aufgebaute metallhaltige Organopolysiloxanpartikel hergestellt werden.
B2a.) Eingesetzt werden die wäßrigen metallfreien Organopolysiloxanpartikeldispersionen, in denen vorzugsweise **R** einen Methyl- oder insbesondere Wasserstoffrest bedeutet. Der Festgehalt der Dispersionen variiert dabei vorzugsweise von 0,1 Gew.-% bis 25 Gew.-%, insbesondere von 4 Gew.-% bis 16 Gew.-% und besonders bevorzugt von 8 Gew.-% bis 12 Gew.-%.

Es sind alle im wäßrigen reduzierend wirkenden Substanzen als Reduktionsmittel geeignet, die sich in einem mit der Organopolysiloxandispersion mischbaren nachstehenden Lösungsmittel mindestens zu 1 Gew.-% lösen. Beispiele für diese reduzierend wirkenden Substanzen sind, Hydrazinhydroxyd, Alkohole, Hydrochinon, Aldehyde, Zucker, und organische Säuren wie Zitronensäure.

Verwendbare Metallverbindungen sind vorstehend unter Schritt B1a) genannt. Die Metallverbindungen sind in einem für die Organopolysiloxandispersion und das Reduktionsmittel verwendeten Lösungsmittel zu mindestens 0.01 Gew.-% löslich. Geeignete Lösungsmittel für die Metallverbindungen sind Wasser oder mit Wasser unbegrenzt mischbare Lösungsmittel wie kurzkettige Alkohole wie Methanol, Ethanol, Isopropanol, Ketone wie Aceton, Ether wie Dioxan, Tetrahydrofuran, Dimethylformamid und Dimethylsulfoxid.

Die gelösten Reaktionspartner werden anschließend gemischt. Mengen an Metallverbindungen und Verhältnis zur Menge an Reduktionsmittel werden vorzugsweise gewählt wie vorstehend unter Schritt B1a) genannt.

Während der Reaktion kann Durchmischung erfolgen, man kann aber auch ohne Durchmischung abreagieren lassen.

Die Reaktionen werden vorzugsweise in einem Temperaturbereich von 0°C bis 100°C, insbesondere in einem Temperaturbereich von 10°C bis 90°C und besonders bevorzugt in einem Temperaturbereich von 25°C bis 70°C durchgeführt

Weiter kann eine Redoxreaktion durch Bestrahlung, z. B. durch UV-Licht angeregt werden. z. B. können auf diese Weise Gold- und Silberkolloide abgeschieden werden.

Die Reaktionszeiten betragen 1 Sekunde bis 10 Tage, bevorzugt 1 Minute bis zwei Stunden, und besonders bevorzugt 30 Minuten bis eine Stunde.

Falls nach dem Ende der Metallabscheidung noch kondensationsfähige Alkoxy- und Hydroxygruppen auf dem Organopolysiloxanpartikel vorhandenen sind, werden diese vorzugsweise mit einer siliciumorganischen Verbindung der vorstehenden allgemeinen Formel (7) abgesättigt.

Im Schritt B2b) kann auf dem nach dem Schritt B2a) hergestellten metallhaltigen Organopolysiloxanpartikel wieder eine Organopolysiloxanschicht durch Aufkondensation von Trialkoxysilanen oder Mischungen von Di- und Trialkoxysilanen hergestellt werden. Es können redispergierbare, mehrschichtige, metallhaltige Organopolysiloxanpartikel hergestellt werden.

Beim Einsatz von Mischungen von Di- und Trialkoxysilanen kann eine Elastomerschicht hergestellt werden. Vorzugsweise werden Silane der vorstehenden allgemeinen Formel (5) eingesetzt, in der **a** die Werte 2 oder 3 hat.

Auf die Organopolysiloxanschicht kann wiederum dasselbe oder ein anderes Metall abgeschieden werden, danach wieder eine Organopolysiloxanschicht. Die Schichten können mehrfach aufeinander aufgebracht werden. Der letzte Schritt bei diesem Verfahren ist der Endstopperschritt für noch kondensationsfähige Alkoxy- und Hydroxygruppen auf dem Organopolysiloxanpartikel mit vorzugsweise einer siliciumorganischen Verbindung der vorstehenden allgemeinen Formel (7).

Organopolysiloxandispersionen, Reduktionsmittel, Metallverbindungen, Lösungsmittel und Verhältnis Reduktionsmittel : Metallverbindung sind vorstehend bei Verfahren B2a) beschrieben.

In Stufe C können schon metallhaltige Organopolysiloxanpartikel mit Hilfe von weiteren Metallverbindungen mit einem Metallüberzug versehen werden.

Die nach Stufe B hergestellten an der Partikeloberfläche metallhaltigen Organopolysiloxane oder wäßrige Dispersionen davon, können mit Metallverbindungen in organischer oder wäßriger Phase umgesetzt werden. Dabei katalysiert das bereits abgeschiedene Edelmetall die Reduktion des unedleren Metalles auf der Substratoberfläche.

Die Metallverbindung muß dabei in einem geeigneten Lösungsmittel löslich sein. Diese sind für die wäßrigen Dispersionen die Lösungsmittel, die in Verfahrensschritt B2b) aufgezählt sind und für die in organischer Phase löslichen metallhaltigen Partikel die Lösungsmittel, die im Verfahrensschritt B1a) und B1b) aufgezählt sind.

Geeignet sind alle Metallverbindungen, die ein positives Redoxpotential gegenüber dem Reduktionsmittel in der jeweiligen chemischen Umgebung aufweisen. Geeignete Reduktionsmittel sind die in Verfahrensschritt B1a) und B1b) genannt. So kann man z.B. auf einem mit nur geringen Palladiumgehalt beschichteten Teilchen unter Verwendung von Reduktionsmitteln Schichten von Nickel, Kupfer oder Silber oder Mischungen davon abscheiden.

Die in Stufe B und C hergestellten metallhaltigen Organopolysiloxanpartikel können wie die metallfreien Organopolysiloxanpartikel in Stufe A aufgearbeitet, isoliert und getrocknet werden.

Die metallhaltigen Organopolysiloxanpartikel können beispielsweise als homogene Katalysatoren für durch Metalle katalysierte Reaktionen, wie Hydrosilylierungen, Hydrierungen, in der Optik zur selektiven Absorption von beispielsweise UV-Strahlung, in der Elektronik aufgrund magnetischer und leitfähiger Eigenschaften, für Beschichtungen aufgrund der vorstehenden Eigenschaften und zum Flammschutz eingesetzt werden.

### Beispiele:

In den nachfolgenden Beispielen sind, falls jeweils nicht anders angegeben,
a) alle Mengenangaben auf das Gewicht bezogen
b) alle Drücke 0,10 MPa (abs.)
c) alle Temperaturen 20° C
d) TEM = Teilchenelektronenmikroskop
e) GPC = Gelpermeationschromatographie
f) DBS = Dodecylbenzolsulfonsäure

Die statische und dynamische Lichtstreuung wurden mit einer Anlage gemessen, die u. a. aus einem Stabilite™ 2060-lls Kr-Laser von Spectra-Physics, einem Goniometer Sp-86 von ALV und einem ALV-3000 Digital Strukturator/Korrelator besteht. Der Krypton-Ionenlaser arbeitete mit einer Wellenlänge von 647,1 nm.

Probenpräparation: Die Proben (Organopolysiloxanpartikel in Toluol; der jeweilige Konzentrationsbereich ist in den Beispielen angegeben) wurden dreimal durch Millex™-FGS-Filter (0.2 µm Porengröße) von Millipore filtriert. Die Meßtemperatur bei den Lichtstreuexperimenten betrug 20°C. Die dynamischen Lichtstreumessungen wurden winkelabhängig von 50° bis 130° in 20°-Schritten durchgeführt, die Korrelationsfunktionen wurden mit dem Simplex-Algorithmus ausgewertet. Beim statischen Lichtstreuexperiment wurde die Winkelabhängigkeit des Streulichts von 30° bis 140° in 5°-Schritten gemessen.

Die strukturelle Charakterisierung der Organopolysiloxanpartikel mittels statischer und dynamischer Lichtstreuung wurde durchgeführt, wie in DE-A-195 19 446 beschrieben.

Herstellungsbeispiele von Organosiloxanmikrogeldispersionen und redispergierbaren Partikeln hieraus:

### a) Herstellung einer hydridofunktionelle Organopolysiloxanmikrogelpartikel enthaltenden Dispersion

In einem 2l Dreihalskolben werden 1000g deionisiertes Wasser und 4g Dodecylbenzolsulfonsäure (DBS) bei 50°C vorgelegt. Zu dieser Lösung tropft man innerhalb von 45 Minuten 160g Methyltrimethoxysilan und rührt ca. 30 Minuten nach. Danach wird eine Mischung aus 21g Methyltrimethoxysilan und 19 g Triethoxysilan innerhalb von 30 Minuten zugegeben. Es wird noch für 3 Stunden bei 50°C nachgerührt. Die erhaltene Dispersion wird abfiltriert.

Der Festgehalt der Dispersion ist ca. 8.5 Gew.-% und der Wasserstoffgehalt ist ca 0.01 Gew-% bezogen auf das Gesamtgewicht der Dispersion. Statische und dynamische Lichstreumessungen in Wasser ergaben einen Rₕ-Wert von 10.5 nm, R_{g} kleiner 10 nm und eine Molmasse von ca. 2 x 10⁶ g/mol. Mit der dynamischen Lichtstreuung wurde ein monodisperses Abklingverhalten der Autokorrelationsfunktion gefunden.

### b) Herstellung von Organopolysiloxanmikrogelpartikeln mit einer hydridofunktionalisierten Hülle

In einem 4l Dreihhalskolben werden 3000g deionisiertes Wasser und 12g DBS vorgelegt und auf 50°C erwärmt. Zu dieser sauren Emulgatorlösung tropft man innerhalb von zwei Stunden 600g Methyltrimethoxysilan unter Rühren zu. Anschließend wird die Dispersion mit 180g Trimethylmethoxysilan versetzt und über Nacht bei Raumtemperatur gerührt.
Anschließend wird die Dispersion mit 6000g einer 20 Gew.-% Lösung von Natriumchlorid gebrochen, abfiltriert, dann erst mehrmals mit 500g Wasser und danach mehrmals mit 300g Methanol nachgewaschen. Der Rückstand wird in 1500g Toluol aufgenommen und über 200g Natriumsulfat getrocknet. Die erhaltene Lösung wird auf 1000g eingeengt.
Die erhaltene Lösung wird mit 80g Dihydridotetramethyldisiloxan und 50 g des sauren Katalysator Tonsil® OPT. FF (Süd-Chemie AG) bei Raumtemperatur versetzt, auf 70°C erwärmt und bei dieser Temperatur 2 Stunden gerührt. Anschließend wird die Lösung abfiltriert und zur Trockene bei 40°C und 1mbar eingedampft.
Man erhält 300g eines weißen Pulvers. Der Wasserstoffgehalt der Substanz beträgt 0.11 Gew.-%. Die Polydispersität der Teilchen lieg laut GPC (Polystyroleichung) bei 1.05. Die Teilchendimensionen wurden mit statischer und dynamischer Lichtstreuung in Toluol bestimmt:
hydrodynamischer Radius Rₕ: 11.2 nm; Trägheitsradius R_{g}: 10 nm; Molmasse 3.6 x 10⁶ g/mol. Aus dem Verhältnis von Rₕ zu R_{g} ergibt sich, daß die Teilchen kugelförmig sind.

### c) Herstellung eines Organopolysiloxanmikrogelpartikels mit hydridofunktionellem Kern und einer quellbaren Hülle

In einem 1l Dreihhalskolben werden 500g deionisiertes Wasser und 4g DBS vorgelegt und auf 50°C erwärmt. Zu dieser sauren Emulgatorlösung tropft man innerhalb von 15 Minuten 14.5 g Triethoxysilan unter Rühren zu. Anschließend wird die Dispersion weitere 45 Minuten gerührt und danach tropft man in einem Zeitraum von 90 Minuten eine Mischung von 43g Methyltrimethoxysilan und 56g Dimethyldimethoxysilan zu. Die Dispersion wird weitere 2 Stunden bei 50°C nachgerührt, danach mit 30g Trimethylmethoxysilan versetzt und weitere 4 Stunden nachgerührt.

Die Dispersion fällt man mit 1000g einer 20 Gew.-% Lösung von Natriumchlorid, filtriert ab, wäscht erst mehrmals mit 100g Wasser und danach mehrmals mit 100g Methanol. Der Rückstand wird in 500g Toluol aufgenommen und über 100g Natriumsulfat getrocknet. Die erhaltene Lösung wird auf 200g eingeengt. Diese Lösung wird mit 20g Dihydridotetramethyldisiloxan und 15 g des sauren Katalysators Tonsil® DPT. FF (Fa. Süd-Chemie) bei Raumtempertaur versetzt, auf 70°C erwärmt und bei dieser Temperatur 2 Stunden gerührt. Anschließend wird die Lösung abfiltriert und zur Trockene bei 40°C und 1mbar eingedampft. Man erhält 48g eines weißen Pulvers. Der Wasserstoffgehalt der Substanz beträgt 0.05 Gew.-%. Die Polydispersität der Teilchen liegt laut GPC (Polystyroleichung ) bei 1.1. Die Teilchendimensionen wurden mit statischer und dynamischer Lichtstreuung in Toluol bestimmt:
hydrodynamischer Radius Rₕ: 20.5 nm; Trägheitsradius R_{g}: 22 nm; Molmasse 6 x 10⁶ g/mol.

### d) Herstellung eines Organopolysiloxanmikrogelpartikels mit einer hydridofunktionellen Schicht mit einer quellbaren Hülle

In einem 1l Dreihhalskolben werden 500g deionisiertes Wasser und 4g DBS vorgelegt und auf 50°C erwärmt. Zu dieser sauren Emulgatorlösung tropft man innerhalb von 15 Minuten 25 g Methyltrimethoxysilan unter Rühren zu. Anschließend wird die Dispersion weitere 30 Minuten gerührt. Danach tropft man in einem Zeitraum von 30 Minuten 9g Triethoxysilan zu. Die Dispersion wird weitere 30 Minuten bei 50°C nachgerührt, danach tropft man eine Mischung von 37.2 g Methyltrimethoxysilan und 48.5 g Dimethyldimethoxysilan innerhalb einer Stunde zu. Die Dispersion wird zwei Stunden bei 50°C weitergerührt.

Die weitere Aufarbeitung erfolgt wie in Herstellungsbeispiel c) beschrieben.

Man erhält 51g eines weißen Pulvers. Der Wasserstoffgehalt der Substanz beträgt 0.03 Gew.-%. Die Polydispersität der Teilchen liegt laut GPC (Polystyroleichung ) bei 1.15. Die Teilchendimensionen wurden mit statischer und dynamischer Lichtstreuung in Toluol bestimmt:
hydrodynamischer Radius Rₕ: 18.5 nm; Trägheitsradius R_{g}: 20 nm; Molmasse 5.2 x 10⁶ g/mol.

### Beispiel 1

(Umsetzung von Metallverbindungen mit in organischen Lösemitteln redispergierbaren hochvernetzten hydridofunktionalisierten Organopolysiloxanpartikeln zur Herstellung von Clustern, Kolloiden und Schichtstrukturen auf der Partikeloberfläche)

1g des hydridofunktionalisierten Organosiloxanmikrogels aus Herstellungsbeispiel b, Wasserstoffgehalt 0.11 Gew.-%, wird in 10g Toluol gelöst. Die Lösung wird bei Raumtemperatur mit Metallsalzlösungen in Methanol oder festen Metallverbindungen versetzt, wie in Tabelle I aufgeführt.

Anschließend wird die jeweilige Mischung bei Raumtemperatur oder erhöhter Temperatur für eine in Tabelle I angegebene Zeit gerührt.
Die Aufarbeitung erfolgt durch Abdampfen des Lösungsmltttels bei 40°C im Hochvakuum oder durch Ausfällen der Partikel in 100g kalten (-70°C) Methanol.

**Tabelle I**

| Beispiel | Metallverbindung | Menge [mg] | Reaktions temperatur [°C] | Reaktionszeit [min] | Farbe |
|---|---|---|---|---|---|
| 1a | Hexachloroplatinsäure | 50mg in 0.5g Methanol | 80 | 30 | braun |
| 1b | dito | 100 in 0.5g MeOH | 80 | 30 | graubraun |
| 1c | dito | 200 in 0.5g MeOH | 80 | 30 | schwarz |
| 1d | dito | 400 in 0.8g MeOH | 80 | 30 | schwarz |
| 1e | dito | 100 mg | 25 | 1.500 | braun |
| 1f | PdCl2 | 100 in 0.5 g MeOH | 25 | 15 | schwarz |
| 1g | dito | 250 in 0.8g MeOH | 25 | 15 | schwarz |
| 1h | Silbertosylat | 100 mg | 80 | 60 | gelb |
| 1i | dito | 300 mg | 80 | 60 | braun |
| 1j | Tetrachlorogoldsäure | 50 in 0.5g MeOH | 80 | 60 | purpur |
| 1k | dito | 200 in 0.8g MeOH | 80 | 60 | rotviolett |
| 1l | Iridiumtrichlorid | 100 in 0.5g MeOH | 80 | 30 | schwarz |
| 1m | Rhodiumtrichlorid | 100 in 0.5g MeOH | 80 | 30 | schwarz |

Alle Produkte sind nach der Aufarbeitung wieder in Toluol vollständig löslich. Mit der Elementaranalyse findet man eine Übereinstimmung der tatsächlichen mit den theoretisch berechneten Metallgehalten.

Die vorliegende Oxidationsstufe 0 des Metalls wird durch NMR nachgewiesen, wie z. B. mit ¹⁹⁵Pt-NMR. Bei allen vermessenen Proben findet man die chemische Verschiebung von -6000 ppm, die für Pt⁰ charakteristisch ist.
Die Metallabscheidung und deren Art auf der Partikeloberfläche kann durch elektronenmikroskopsiche Aufnahmen nachgewiesen werden.
Zudem werden die Moleküldimensionen mit statischer und dynamischer Lichtstreuung in Lösung bestimmt. Die Ergebnisse sind in Tabelle Ia aufgeführt.

**Tabelle Ia**

| Probe | Rₕ [nm] | R_{g} [nm] | Verteilung |
|---|---|---|---|
| 1a | 13.5 | 12 | monodispers |
| 1f | 12 | 11.5 | monodispers |
| 1j | 11 | 11 | monodispers |

### Beispiel 2

### (Analog Beispiel 1, aber nach der Metallabscheidung wird noch mit 1-Octen umgesetzt.)

2g des hydridofunktionalisierten Organosiloxanmikrogels aus Herstellungsbeispiel b werden in 15g Toluol gelöst und anschließend bei Raumtemperatur mit 0.5g einer 10-%igen methanolischen Lösung von Hexachloroplatinsäure unter Rühren versetzt. Das Reaktionsgemisch wird auf 80 °C erwärmt. Nach 30 min werden bei dieser Temperatur 15g 1-Octen zugegeben. Das Reaktionsgemisch wird zum Rückfluß erhitzt und dort 15 Minuten gehalten. Nach dem Abkühlen wird das Produkt in 150 ml -70°C kaltem Methanol ausgefällt, abfiltriert und mehrmals mit kaltem Methanol nachgewaschen.
Man erhält 5g eines grauweißen Produktes, das in Toluol, THF etc. löslich ist.

### Beispiel 3

### (Analog Beispiel 1, aber die Metallabscheidung bildet einen Kern oder eine Schicht im Inneren des Partikel.)

### Beispiel 3.1 Metallhaltiger Partikelkern

2g des hydridofunktionalisierten Organopolysiloxans aus Herstellungsbeispiel 1c, Wasserstoffgehalt 0.05 Gew.-%, werden in 15 g Toluol gelöst. Anschließend wird das Metallsalz oder die Metallsalzlösung bei Raumtemperatur zugegeben. Die jeweilig verwendeten Metallverbindungen, Reaktionstemperaturen und -zeiten sind in der Tabelle II zusammengefaßt.

**Tabelle II**

| Beispiel | Metallsalz | Menge [mg] | Reaktionstemperatur | Reaktionszeit [min] | Farbe |
|---|---|---|---|---|---|
| 3.1 a | Hexachlorplatinsäure | 200 in 0.8g Cyclohexanon | 80°C | 120 min | schwarzbraun |
| 3.1 b | Tetrachlorogoldsäure | 100 in 0.5g Methanol | 60°C | 1.500 | purpur |
| 3.1 c | Silbertosylat | 150 | 80°C | 120 | gelbbraun |

Die metallhaltigen Kerne können mit elektromikroskopischen Aufnahmen nachgewiesen werden.

### Beispiel 3.2: metallhaltige Schicht im Partikel

2g des hydridofunktionalisierten Organopolysiloxan aus Herstellungsbeispiel d werden in 15 g Toluol gelöst. Anschließend wird das Metallsalz oder die Metallsalzlösung bei Raumtemperatur zugegeben. Die jeweilig verwendeten Metallverbindungen, Reaktionstemperaturen und -zeiten sind in der Tabelle III zusammengefaßt.

**Tabelle III**

| Beispiel | Metallsalz | Menge [mg] | Reaktionstemperatur | Reaktionszeit | Farbe |
|---|---|---|---|---|---|
| 3.2 a | Hexachlorplatinsäure | 200 in 0.8g Cyclohexanon | 80°C | 120 min | gelbbraun |
| 3.2 b | Tetrachlorgoldsäure | 100 in 0.5g Methanol | 60°C | 1.500 | rotviolett |
| 3.2 c | Silbertosylat | 150 | 80°C | 120 min | gelb |

Mit elektromikroskopischen Aufnahmen können weder Kolloide, Cluster oder metallhaltige Kerne nachgewiesen werden. Daher muß eine dünne Metallschicht vorliegen.

### Beispiel 4:

### Methylpolysiloxanmikrogelteilchen als Grundlage + externes Reduktionsmittel

Die Synthese der Methylpolysiloxanmikrogelteilchen ist in der DE-A-19519446 beschrieben.

5g des Methylpolysiloxanmikrogelteilchens werden in 50g Toluol bei Raumtemperatur gelöst. Die Lösung wird mit einer Metallsalzlösung gemäß Tabelle IV versetzt und gerührt. Danach wird das Reduktionsmittel gemäß Tabelle IV zugegeben. Nach der Reaktion werden die Produkte in 500ml kalten (-70°C) Methanol ausgefällt, abfiltriert und im Hochvakuum getrocknet.

**Tab. IV**

| Beispiel | Metallsalz | Menge [mg] | Reduktionsmittel | Reaktionstemperatur [°C] | Reaktionszeit [min] |
|---|---|---|---|---|---|
| 4 a | Hexachloroplatinsäure | 100 in 0.5g Hexanon | 100 mg Hydrazin | 25 | 30 |
| 4b | dito | 200 in 1g Ethanol | Ethanol | 80°C | 180 |
| 4c | dito | 150 in 1g Cyclohexanon | 0.5g Acetaldehyd | 80°C | 30 |
| 4d | Palladiumdichlorid | 100 in Cyclohexanon | 100 mg Hydrazin | 25 | 10 |
| 4e | Silbertosylat | 100 | 100 mg Hydrazin | 80°C | 15 |
| 4f | Tetrachlorogoldsäure | 100 | dito | 80°C | 15 |
| 4g | Kupferacetylacetonat | 100 | dito | 100°C | 180 |
| 4h | Nickelcarbonyl | 100 | dito | 50°C | 240 |

Alle Proben sind in Toluol und THF löslich. Mit Ausnahme von 4e und 4f sind alle Produkte schwarz. 4e ist braungelb, 4f ist purpur.
Im TEM sind keine losen Metallkolloide oder -cluster sichtbar. Nur dort wo Trägerpartikel abgebildet sind, befinden sich auch Metallcluster und -kolloide. Somit befinden sich keine "freien" Metallcluster bzw. -kolloide im Produkt.

### Beispiel 5

### (Reduktion in wäßrigen Systemen mit Si-H)

Zu 50g der sauren (pH ist 1 bis 2) wäßrigen Dispersion von hydridofunktionalisierten Organosiloxanmikrogelteilchen aus Herstellungsbeispiel a werden bei Raumtemperatur 50 g einer 10⁻² molaren Salzlösung unter starkem Rühren zugetropft. Anschließend wird für eine gewisse Zeit bei einer bestimmten Temperatur gemäß Tabelle V weitergerührt.

**Tabelle V**

| Beispiel | Metallsalz | Reaktionstemperatur [°C] | Reaktionszeit [min] |
|---|---|---|---|
| 5a | Hexachloroplatinsäure | 80 | 15 |
| 5b | Palladiumdichlorid | 25 | 10 |
| 5c | Silbernitrat | 80 | 30 |
| 5d | Tetrachlorogoldsäure | 80 | 30 |

Die erhaltenen Dispersionen werden anschließend auf 50°C gebracht und mit 5g Trimethylethoxysilan versetzt und bei dieser Temperatur ca. 2 Stunden lang gerührt.
Diese Dispersionen werden mit 20 Gew.-%iger Natriumchloridlösung gebrochen, mehrmals mit voll entsalzten Wasser (insgesamt 500g) nachgewaschen. Der Rückstand wird in ca. 100g einer Mischung aus 80 Teilen Toluol und 20 Teilen Aceton aufgenommen und über Natriumsulfat getrocknet. Anschließend wird das Toluol abgezogen und der Rückstand im Hochvakuum bei 40°C für 1 Stunde getrocknet.

Alle Proben sind in Toluol und THF löslich.

Im TEM sind keine losen Metallkolloide oder -cluster sichtbar. Nur dort wo Trägerpartikel abgebildet sind, befinden sich auch Metallcluster und -kolloide. Somit befinden sich keine "freien" Metallcluster bzw. -kolloide im Produkt.

### Beispiel 6:

### (wäßrige Systeme mit externen Reduktionsmitteln)

Die Synthese der wäßrigen Methylpolysiloxanmikrogelpartikel enthaltenden Dispersion ist in der DE-A-19519446 beschrieben. 50 g einer Methylpolysiloxanmikrogelpartikel enthaltenden Dispersion ( Feststoffgehalt ca. 8 Gew.-%) werden unter starkem Rühren mit einer 10 ⁻² molaren Metallsalzlösung bei Raumtemperatur versetzt. Anschließend wird das Reduktionsmittel als Lösung oder in Substanz gemäß Tabelle V zugegeben. Danach wird für eine bestimmte Zeit bei einer bestimmten Temperatur gemäß Tabelle VI nachgerührt.

**Tab. VI**

| Beispiel | Metallsalz | Reduktionsmittel in [g] | Reaktionstemperatur [°C] | Reaktionszeit in [min] |
|---|---|---|---|---|
| 6 a | Hexachloroplatinsäure | 0.2 g Hydroxylamin | 80°C | 30 |
| 6 b | Palladiumdichlorid | 0.2 g Hydroxylamin | 25 | 10 |
| 6c | Silbernitrat | 0.2 g Glucose | 50 | 20 |
| 6d | Tetrachlorogoldsäure | 1g 10%-ige wäßrige Lösung Natriumborhydrid | 80 | 30 |
| 6e | Nickelsulfat | dito | 80 | 60 |
| 6f | Kupfersulfat | 0.2 g Glucose | 80 | 60 |
| 6g | Iridiumtrichlorid | 1g 10%-ige wäßrige Natriumborhydridlösung | 80 | 60 |
| 6h | Rhodiumtrichlorid | dito | 80 | 60 |

Die erhaltenen Dispersionen werden dann wie im Beispiel 5 beschrieben weiter aufgearbeitet.
Alle Proben sind in Toluol und THF löslich.
Im TEM sind keine losen Metallkolloide oder -cluster sichtbar. Nur dort wo Trägerpartikel abgebildet sind, befinden -sich auch Metallcluster und -kolloide. Somit befinden sich keine "freien" Metallcluster bzw. -kolloide im Produkt.

### Beispiel 7

### (Reduktion durch UV-Bestrahlung)

50g der in Beispiel 6 eingesetzten Methylpolysiloxanmikrogeldispersion werden mit 50g 10⁻² molarer Silbernitratlösung unter starkem Rühren bei Raumtemperatur versetzt. Die Lösung wird bei 25°C mit einer Quecksilberhalogenlampe (1W) 15 min lang bestrahlt. Man erhält eine gelbe Dispersion.
Die Dispersion wird wie im Beispiel 5 beschrieben aufgearbeitet.
Das gelbe Pulver ist in Toluol und THF löslich.
Im TEM sind keine losen Metallkolloide oder -cluster sichtbar. Nur dort wo Trägerpartikel abgebildet sind befinden sich auch Metallcluster und -kolloide. Somit befinden sich keine "freien" Metallcluster bzw. -kolloide im Produkt.

### Beispiel 8

### (Schichtstruktur in wäßrigen Dispersionen aufbauen)

Zu einer Vorlage aus 500g Wasser und 2g Dodecylbenzolsulfonsäure werden bei 50°C 20g Methyltrimethoxysilan innerhalb von 10 Minuten langsam unter Rühren zugetropft. 10 Minuten nach dem Ende des Zutropfens gibt man 5g Triethoxysilan zu. Weitere 10 Minuten werden nachgerührt. Anschließend wird die Dispersion mit 10g einer 1-%igen Hexachloroplatinsäure versetzt und für 30 Minuten nachgerührt. Die Lösung wird braun-schwarz. Anschließend tropft man 20g Methyltrimethoxysilan innerhalb von 10 Minuten zu. Nach weiteren 10 Minuten werden nochmals 5g Trimethoxysilan zugegeben und 10 Minuten nachgerührt. Danach versetzt man die Vorlage langsam mit 10g einer 1-% Palladiumdichloridlösung. (Dispersion wird schwarz). Nach 10 Minuten tropft man innerhalb einer Stunde nochmals 50g Methyltrimethoxysilan zu.
Anschließend wird die Dispersion, wie im Beispiel 5 beschrieben aufgearbeitet.
Das erhaltene schwarze Pulver ist in organischen Lösemitteln, wie THF, Toluol, etc. löslich.

### Anwendungsbeispiele:

### Beispiel 9

### (Hydrierung)

In einem 200 ml Schlenkrohr legt man 120 g einer 30 Gew.-%-igen Lösung von 1-Octen in Cyclohexan vor. Als Katalysator dienen 100mg (entspricht 4 mg Platin bzw. 25 ppm Platin bezogen auf 1-Octen) der in Beispiel 1b hergestellten Verbindung. Anschließend wird das Schlenkrohr mehrmals bis zum Sieden des Lösungsmittel evakuiert, um die Lösung zu entgasen. Danach preßt man Wasserstoffgas (2 bar Überdruck) bei Raumtemperatur auf die gerührte Lösung. Es setzt sofort eine exotherme Hydrierung ein, Die Innentemperatur erreicht ca. 65 °C.
Nach 30 Minuten ist die Hydrierung abgeschlossen.
Im GC kann nur Oktan nachgewiesen werden.

### Beispiel 10

### (Hydrosilylierung)

In einem Kolben werden 13.2 g 1-Dcten und 13 mg (entpricht 0.5 mg Platin bzw. 18 ppm bezogen auf die Gesamtmasse der Edukte) des in Beispiel 1c hergestellten Katalysators vorgelegt. Die Lösung wird auf 120°C erwärmt und 14.8g Triethoxysilan werden zugetropft. Die Reaktion ist exotherm. Nach ca. 20 min ist die Reaktion vollständig abgelaufen.

### Beispiel 11

### (Beschichtungen)

1g des im Beispiel 1d hergestellt Pulver werden in 9g Toluol gelöst. In diese Lösung taucht man eine Polypropylenfolie für 10 Minuten ein. Danach wäscht man die Folie mit 3 mal 10 ml Aceton und trocknet die Folie bei Raumtemperatur und Normaldruck für zwei Tage.
Die elektromikroskopischen Aufnahmen zeigen eine nahezu monomolekulare Schicht von metallhaltigen Partikeln auf der Substratoberfläche.

## Patentansprüche

1. Aus einem einzigen Molekül bestehende vernetzte Organopolysiloxanpartikel, die Metallatome in der Oxidationsstufe 0 aufweisen, welche jeweils mindestens mit einem weiteren Metallatom in der Oxidationsstufe 0 in intermetallischer Wechselwirkung stehen, einen mittleren Durchmesser von 5 bis 200 nm besitzen und die in mindestens einem organischen Lösungsmittel, das ausgewählt wird aus Dichlormethan, Pentan, Aceton, Toluol und Ethanol zu mindestens 0.1 Gew.-% löslich sind, wobei mindesten 80% der Partikel einen Durchmesser besitzen, der höchstens 30 % vom mittleren Durchmesser abweicht.

2. Organopolysiloxanpartikel nach Anspruch 1, bei denen die mittleren Molmassen 5 x 10⁵ g/mol bis 10¹⁰ g/mol betragen.

3. Organopolysiloxanpartikel nach Anspruch 1 oder 2, bei denen der relative gesamte Gehalt an Metall in der Oxidationsstufe 0 10 ppm bis 50 Gew.-% beträgt.

4. Organopolysiloxanpartikel nach Anspruch 1 bis 3, bei denen der Organopolysiloxananteil im wesentlichen aus
0,5 bis 80 Gew.-% Einheiten der allgemeinen Formel 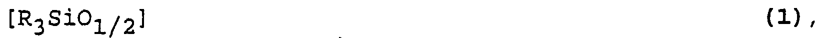
0 bis 99.0 Gew.-% Einheiten der allgemeinen Formel 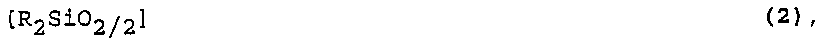
0 bis 99,5 Gew.-% Einheiten der allgemeinen Formel 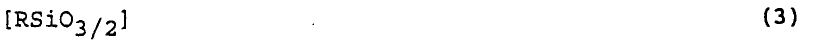 und
0 bis 99,5 Gew.-% Einheiten der allgemeinen Formel 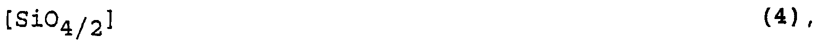 besteht, wobei
**R** ein Wasserstoffatom oder gleiche oder verschiedene einwertige SiC-gebundene, gegebenenfalls funktionelle Gruppen tragenden C₁- bis C₁₈-Kohlenwasserstoffreste bedeutet.

5. Verfahren zur Herstellung der aus einem einzigen Molekül bestehenden metallhaltigen vernetzten Organopolysiloxanpartikel gemäß Anspruch 1 bis 4, bei dem
A) der Organopolysiloxananteil der Organopolysiloxanpartikel in einem ersten Schritt durch Zudosieren von Silanen der allgemeinen Formel (5) 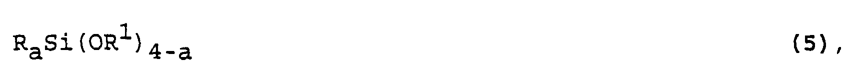 und gegebenenfalls siliciumorganischen Verbindungen der allgemeinen Formel (6) 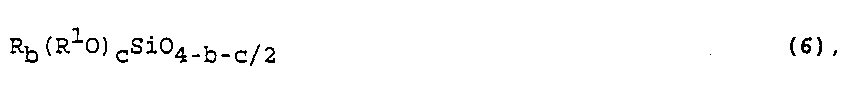 wobei
**R**^{**1**} die Bedeutungen von **R**,
**a** die Werte 0, 1, 2 oder 3,
**b** und **c** jeweils unabhängig voneinander die Werte 0, 1, 2, 3 oder 4 und
**R** die vorstehenden Bedeutungen aufweist, zu einer bewegten Mischung aus Emulgator und Wasser als eine kolloidale Suspension von Organopolysiloxanpartikeln hergestellt wird und
in einem Zweiten Schritt die kolloidale Suspension mit siliciumorganischer Verbindung der allgemeinen Formel (7) 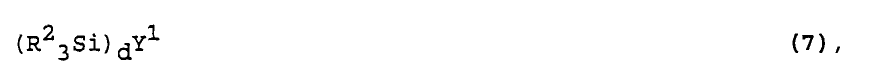 versetzt wird, wobei
**Y**^{**1**} für die Bedeutungen **d** = 1 ein Wasserstoffatom, -OR³, -ONR³₂ oder -OOCR³ und
für die Bedeutungen **d** = 2 -O- oder -S- bedeutet,
**R**^{**2**}und **R**^{**3**} die Bedeutungen von **R** und
**d** die Werte 1 oder 2 aufweisen,
mit der Maßgabe, daß die siliciumorganischen Verbindungen der allgemeinen Formel (7) wasserlöslich sind oder in Wasser zu einer wasserlöslichen Verbindung hydrolysieren und
B) der Metallanteil der Organopolysiloxanpartikel durch Reduktion einer Metallverbindung mit einem Reduktionsmittel auf die nach Verfahrensstufe A hergestellten metallfreien Organopolysiloxanpartikel abgeschieden wird.

6. Verwendung der Organopolysiloxanpartikel nach Anspruch 1 bis 4 als homogene Katalysatoren, in der Optik, in der Elektronik, im Flammschutz und für Beschichtungen.
